# NOUVEAU FASCICULE DE BREVET EUROPEEN

(11) **EP 2 058 078 B2**
(45) Date de publication et mention de la décision concernant l'opposition: **24.07.2019**
(45) Mention de la délivrance du brevet: 27.06.2012
(21) Numéro de dépôt: 08168171.0
(22) Date de dépôt: 03.11.2008
(51) Int. Cl.: B23K 9/12

(54) **Procédé de soudage à l'arc par court-circuit avec électrode fusible**
Lichtbogen-Schweißverfahren durch Kurzschluss mit abschmelzender Schmelzelektrode
Method of arc welding by short circuit with fusible electrode

(30) Priorité: 06.11.2007 FR 0758825
(43) Date de publication de la demande: 13.05.2009
(73) Titulaire: AIR LIQUIDE WELDING FRANCE, 75007 Paris (FR)
(72) Inventeur: Chevalier, Richard, 95300 Pontoise (FR); Gadrey, Sébastien, 58230 Gouloux (FR); Plottier, Gérard, 93380 Pierrefitte (FR); Revel, Olivier, 95480 Pierrelaye (FR)
(74) Mandataire: Grosse Schumacher Knauer von Hirschhausen

(56) Documents cités:
- EP-A- 1 182 001
- EP-A- 1 384 546
- EP-A1- 1 985 400
- EP-B1- 0 441 337
- WO-A1-00/64620
- WO-A1-2007/094090
- DE-A1- 19 738 785
- DE-C2- 4 091 340
- US-A1- 2006 138 115
- US-B1- 6 215 100

## Description

L'invention concerne un procédé de soudage à l'arc suivant le préambule de la revendication 1, mettant en oeuvre une électrode consommable dans laquelle circule un courant, et une protection gazeuse du bain de soudure, ainsi qu'un dispositif de commande de l'alimentation électrique, d'un générateur de soudage à l'arc par transfert de métal, et un générateur de soudage MIG/MAG.

On appelle soudage MIG ou MAG, pour respectivement « *Metal Inert Gas* » (soudure de métal sous gaz inerte) et « *Metal Active Gas* » (soudure de métal sous gaz actif), les techniques de soudage ou de soudo-brasage, à l'arc électrique avec électrode fusible et gaz de protection, notamment de tôles, revêtues ou non. Ces techniques de soudage sont également connues sous l'appellation générale « GMAW » pour « *Gas Metal Arc Welding* » (pour soudure à l'arc de métal sous gaz).

Lors de la mise en oeuvre de ces procédés MIG ou MAG, la chaleur que dégage l'arc électrique provoque la fusion de l'extrémité du métal d'apport, c'est-à-dire du fil fusible, et du métal de base, c'est-à-dire du métal ou alliage métallique constitutif des pièces à souder. Un gaz ou un mélange de gaz assure habituellement la protection du bain de fusion, c'est-à-dire du joint de soudage en cours de formation, contre les contaminations atmosphériques durant le soudage.

De manière schématique, un dispositif connu pour réaliser une soudure à l'arc MIG ou MAG comporte des moyens d'alimentation électrique, un circuit de commande et un fil métallique ou électrode fusible, positionné au voisinage, notamment au-dessus, d'une ou plusieurs pièces à souder sur la ou lesquelles une soudure doit être réalisée.

Des moyens de mesure sont utilisés afin de déterminer les valeurs du courant (I) circulant dans la (ou les) pièce(s) à souder et de la tension (U) entre une pièce à souder et l'électrode. Ces moyens de mesure permettent également de commander des moyens d'alimentation en courant et/ou le circuit de commande.

L'électrode consommable est un fil fusible au sein duquel passe un courant électrique délivré par les moyens d'alimentation. Le passage du courant est contrôlé par le circuit de commande et permet d'échauffer l'extrémité du fil située en regard des pièces ou du bain de soudure. Cette extrémité de fil fond, ce qui provoque alors la formation d'une goutte qui est ensuite déposée sur la ou les pièces au niveau du plan de joint.

Plus précisément, le transfert de métal depuis l'électrode vers le bain de soudure se fait selon un mode de fonctionnement standard connu, appelé transfert par court-circuit. Ce mode de transfert par court-circuit est obtenu pour de faibles énergies d'arc, typiquement pour une intensité de moins de 200 A et une tension de l'ordre de 14 à 20 V, et se caractérise par la formation d'une goutte de métal fondu au bout du fil venant en contact avec le bain de métal liquide. Lors du contact, le courant I augmente rapidement, faisant alors apparaître un pincement ou striction facilitant le détachement de la goutte de métal fondu et son passage vers le bain de soudure. Ce phénomène se répète au fil du temps et donc de la formation du joint de soudure, à des fréquences de l'ordre de 50 à 200 Hz.

Cette technique de soudage par court-circuit permet de souder de faibles épaisseurs, typiquement de moins de 5 mm, grâce à une grande maîtrise du bain de fusion mais conduit à un arc court et instable, et à des projections de métal sur les pièces soudées, ce qui nuit à la qualité.

En outre, il arrive que l'énergie incidente soit trop élevée causant ainsi des excès de pénétration, voire un percement de la tôle. On note également que le taux de dépôt est relativement faible lorsqu'on souhaite diminuer les énergies de soudage et qu'il est très difficile d'établir un régime d'arc stable avec de faibles intensités.

Dans certains cas, comme en transfert pulsé où l'arc est stable, les énergies élevées mises en jeu conduisent à d'importantes déformations de la pièce finale. Ceci résulte du fonctionnement intrinsèque du transfert pulsé qui est obtenu grâce à des pics d'intensité très importants de l'ordre de 450 A entraînant le détachement des gouttes du fil fusible avant leur contact avec la pièce, mais ce qui provoque alors des déformations car l'énergie nécessaire au détachement des gouttes est trop élevée pour la pièce.

Diverses méthodes ont été proposées afin de tenter de mieux contrôler le courant et notamment de limiter les projections se produisant lors de la rupture du col.

Ainsi, il a été proposé un premier procédé de soudage appelé procédé de soudage « CSC » ou « CSC-MIG », où CSC signifie « *Controlled Short Circuiting* », pour court-circuit contrôlée.

Ce procédé CSC, notamment illustré dans le document EP-A-1384546, met en oeuvre un mouvement alternatif, c'est à dire de va-et-vient mécanique, du dévidage du fil constituant l'électrode consommable de manière à diminuer l'énergie à l'allumage de l'arc et donc les projections de métal. Cependant, ce procédé n'est pas idéal car limité par une faible fréquence de transfert et nécessite de maintenir un mode de transfert par court-circuit. En outre, comme la fréquence de transfert est relativement basse, c'est-à-dire que les périodes de transfert sont relativement longues, les gouttes qui se forment sont grosses, ce qui engendre des difficultés de soudage des tôles fines. Ainsi, en pratique, il n'est pas envisageable d'obtenir des soudures de bonne qualité sur des tôles d'épaisseurs inférieure à 0.8 mm avec le procédé CSC. On note également qu'un dispositif permettant de mettre en oeuvre un procédé CSC est relativement compliqué et onéreux, notamment du fait qu'il faut prévoir des moyens pour appliquer une vitesse négative au fil de l'électrode consommable.

Il a été proposé par ailleurs un autre procédé de soudage, appelé procédé de soudage « STT » pour « *Surface Tension Transfert »* ou transfert par tension de surface.

Ce procédé STT, notamment illustré par le document FR-A-2666261, met en oeuvre une impulsion d'intensité qui est générée avant que l'arc ne se rallume, donc pendant la période de court-circuit, afin d'amorcer la striction du pont de métal liquide, tout en évitant de réamorcer l'arc sous forte intensité.

Bien qu'avantageux car il permet de gérer assez précisément l'énergie pour détacher une goutte de métal, ce procédé conduit fréquemment à des projections non désirées s'il est mal contrôlé. En outre, sa mise en oeuvre est compliquée et nécessite un réglage précis de nombreux paramètres, ce qui limite sa plage de réglage et d'utilisation. Le document EP-1 182 001 A1 décrit un tel procédé de soudage à l'arc avec électrode consommable.

On connait en outre le document US-A-2006/0138115 qui décrit un procédé de soudage à l'arc mettant en oeuvre une électrode consommable dont une extrémité est progressivement fondue par un courant électrique alimentant l'électrode, dans lequel se succèdent au cours du temps, des cycles de soudage comprenant chacun une période d'arc et une période de court-circuit où le métal liquide établit un court-circuit entre l'extrémité fondue de l'électrode et au moins une pièce à souder. Selon ce procédé, la vitesse de fil augmente dès la fin de la période de court-circuit.

Le but de la présente invention est de remédier aux inconvénients précités pour les procédés GMAW, CSC et STT tout en conservant la capacité de contrôler le transfert par court circuit.

En d'autres termes, un problème qui se pose est de proposer un procédé de soudage à l'arc mettant en oeuvre une électrode consommable dans laquelle circule un courant électrique permettant d'obtenir des périodes de transfert courts et d'éviter les projections de métal de manière à améliorer la qualité du soudage.

Une solution selon l'invention est alors un procédé de soudage à l'arc mettant en oeuvre une électrode consommable dont une extrémité est progressivement fondue par un courant électrique alimentant l'électrode, dans lequel se succèdent au cours du temps (t), des cycles de soudage (A-C-A) comprenant chacun une période d'arc (uₐ ; instants A-C) et une période de court-circuit (C-A) où le métal liquide établit un court-circuit (CC) entre l'extrémité fondue de l'électrode et au moins une pièce à souder, chaque cycle comprenant les étapes de :
a) maintien d'une intensité d'arc I₂ constante pendant une période (A₃ à A₄) de la période d'arc (A-C) en même temps que le déplacement de l'électrode consommable vers la pièce à souder, à une vitesse V₁, de préférence sensiblement constante V₁ ;
b) diminution de l'intensité pour atteindre une intensité minimale I₁ au début (en C) de la période de court-circuit avec I₁ < I₂;
c) diminution de la vitesse de déplacement du fil de l'électrode consommable pour atteindre une vitesse minimale V₃, avec V₃ < V₁, maintien de cette dite vitesse à la vitesse V₃ au cours d'au moins une partie de la période de court-circuit (C-A) ;
d) augmentation de l'intensité au cours de la période de court-circuit (C-A) pour atteindre une valeur maximale I₄, avec I₄ ≥ I₂ ;
e) puis, subséquemment à l'étape d), diminution de l'intensité au cours de la période de court-circuit (C-A) pour atteindre une valeur minimale I₁, avec I₁ < I₂, avec maintien de cette dite intensité à cette valeur minimale I₁ constante,
caractérisé en ce que la vitesse minimale V₃ est conservée au début de la période d'arc (en A).

Grâce à l'augmentation de l'intensité et dans le même temps à la diminution de la vitesse de déplacement du fil de l'électrode consommable au cours de la période de court-circuit, il est possible tout à la fois d'avoir des périodes de court-circuit relativement courtes, notamment de durées inférieures à celles obtenues avec un procédé CSC car on ne retire pas mécaniquement le fil du bain de soudure. Ainsi, on peut assurer un transfert rapide et bien contrôlé de la goutte de métal fondu, évitant de générer des projections. En d'autres termes, durant les étapes d) et e), il se produit un pic de courant durant une partie de la période de court-circuit qui permet de détacher les gouttes de métal pendant les courts-circuits, par la combinaison de l'effet de la décélération du fil, et l'effet de l'impulsion de courant dans le même temps.

Plus précisément, lors du court-circuit, la tension chute naturellement car la différence de potentiel est nulle. A ce moment, on commande une hausse de l'intensité pendant un temps déterminé à travers le système de commande électronique d'acquisition/régulation du générateur de soudage et, de la même façon, le générateur de soudage commande au moteur du dévidoir de stopper le dévidage du fil. La goutte transfert alors, c'est à dire se détache, par capillarité aidé par la hausse d'intensité et l'arrêt du fil. L'arc se rétablit ensuite à faible courant commandé par le générateur de soudage qui, après un temps donné, commande une intensité permettant de former une goutte de métal liquide pour le prochain court-circuit. Le générateur, pendant cette même période, commande le moteur du dévidoir pour qu'il dévide le fil jusqu'au prochain court circuit.

Selon différents modes de réalisation, l'invention peut comprendre l'une ou plusieurs des caractéristiques suivantes :
- la vitesse minimale V₃ est sensiblement nulle, c'est-à-dire nulle (V₃=0) ou quasi-nulle (V₃ très proche de 0).
- à l'étape d), l'augmentation de l'intensité (de I₁ à I₄) au cours de la période de court-circuit se produit pendant la diminution de la vitesse de déplacement du fil de l'électrode consommable (de V₁ à V₃) de l'étape c),
   - on augmente l'intensité (de I₁ à I₄) au cours de la période de court-circuit et on diminue la vitesse de déplacement du fil jusqu'à obtenir une vitesse minimale V₃ (de préférence V₃=0) engendrant le détachement d'au moins une goutte de métal fondu de l'extrémité fondue de l'électrode,
- la valeur d'intensité maximale I₄ est maintenue pendant un palier (C₂ à C₃) alors que la vitesse de déplacement du fil de l'électrode consommable est maintenue à la vitesse minimale V₃,
- la valeur de la tension est mesurée pour déclencher la baisse d'intensité avant le rétablissement de l'arc, alors que la vitesse de déplacement du fil de l'électrode consommable est maintenue à la vitesse minimale V₃,
- lors du soudage, on met en oeuvre une protection gazeuse et on réalise le soudage d'une ou plusieurs pièces métalliques en un métal ou alliage métallique choisi parmi les aciers au carbone revêtus ou non, les aciers inoxydables revêtus ou non, et l'aluminium ou le titane, revêtus ou non.

L'invention vise également un dispositif de commande de l'alimentation électrique d'un générateur de soudage à l'arc par transfert de métal par court-circuit mettant en oeuvre une électrode consommable, ledit générateur comprenant des moyens d'alimentation en courant électrique, ledit dispositif comprenant un circuit de commande pour la mise en oeuvre du procédé ci-dessus.

L'invention porte également sur un générateur de courant de soudage MIG/MAG comprenant des moyens d'alimentation en courant électrique et un dispositif de commande desdits moyens d'alimentation électrique selon le dispositif ci-dessus.

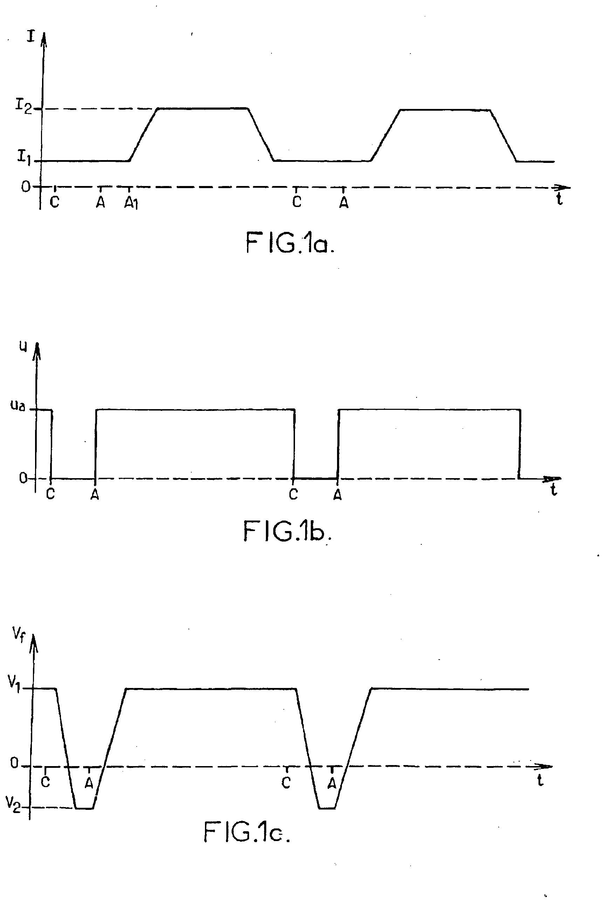

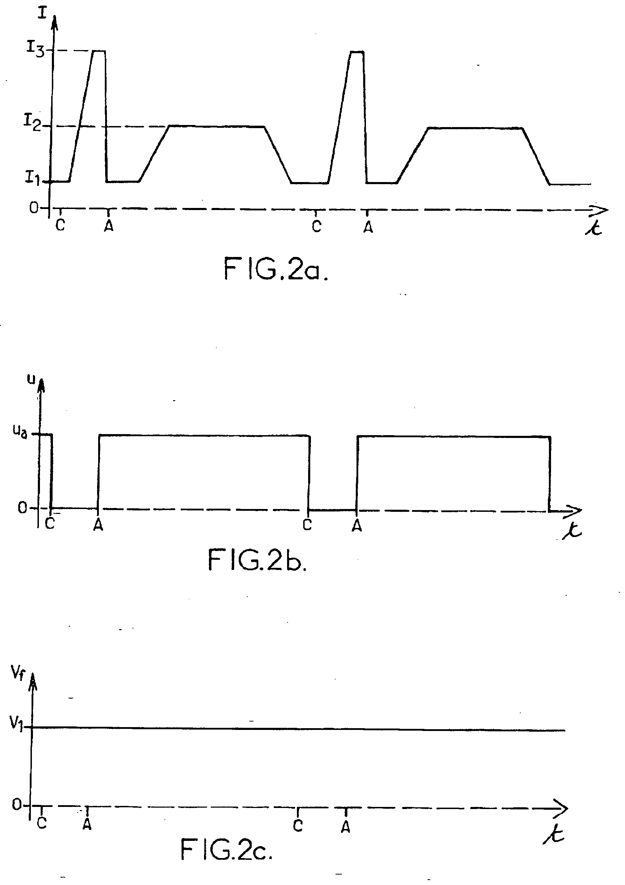

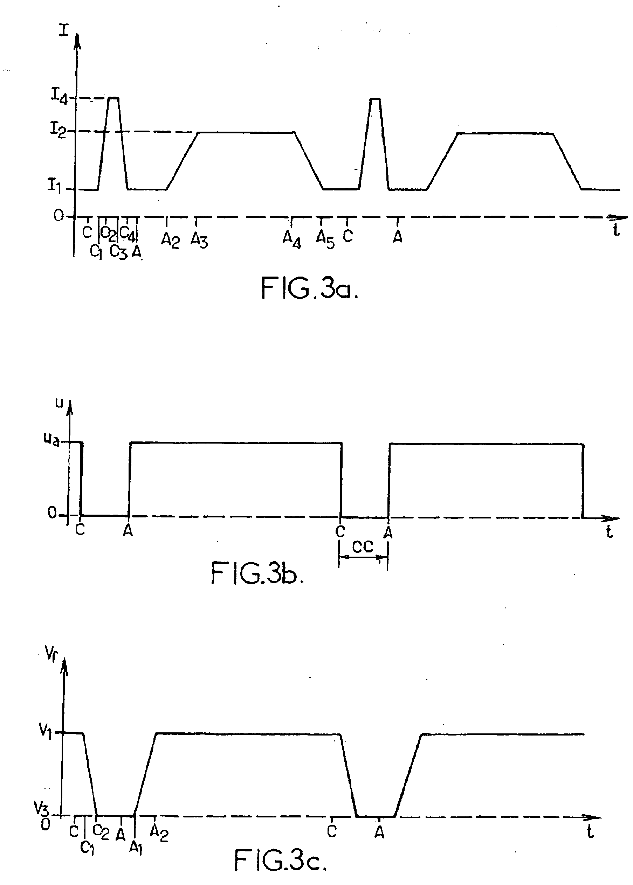

L'invention sera décrite ci-après plus en détails en références aux figures illustratives annexées qui représentent respectivement les cycles d'intensité, de tension et de vitesse du fil au cours du temps (t en abscisses) obtenus :
- pour les figures 1a à 1c, lors de la mise en oeuvre d'un procédé de soudage CSC selon l'art antérieur,
- pour les figures 2a à 2c, lors de la mise en oeuvre d'un procédé de soudage STT selon l'art antérieur, et
- pour les figures 3a à 3c, lors de la mise en oeuvre d'un procédé de soudage selon la présente invention.

Plus précisément, chaque série de figures 1a à 1c, 2a à 2c, et 3a à 3c représente l'évolution de l'intensité (I), de la tension (U) et de la vitesse du fil (Vf) en fonction de la même échelle du temps (t) en abscisses pour les procédés CSC, STT et selon l'invention, respectivement. Il est toutefois à noter que les échelles de temps (t) de chaque série de schémas ne sont pas nécessairement comparables entre elles.

Par ailleurs, il va de soi qu'une période de court-circuit (CC) suivie d'une période d'arc est répétée autant de fois que nécessaire pour effectuer le soudage désiré, c'est-à-dire la totalité du joint de soudure.

Sur toutes les figures 1, 2 et 3, une période de transfert se déroule sensiblement entre les instants A et A suivant et les périodes de court-circuit (CC) entre les instants C et A.

Les figures 1a à 1c illustrent la succession des variations des principaux paramètres en fonction du temps t, pour un procédé CSC selon l'art antérieur, en particulier la variation de l'intensité I du courant circulant dans la pièce (Fig. 1a), de la tension u entre la (ou les) pièce(s) à souder et l'électrode consommable (Fig. 1b), de la vitesse de déplacement Vf du fil-électrode consommable (Fig. 1c).

On appelle « cycle de transfert», une succession d'étapes entre le dépôt de deux gouttes de métal successives. Comme mentionné ci-dessus et de manière générale, le dépôt d'une goutte de métal s'effectue à la fin d'un court-circuit.

Sur la figure 1b on voit que la tension uₐ (tension d'arc) est sensiblement constante et non nulle entre les instants A et C et sensiblement égale à O entre les instants C et A qui correspondent à la période de temps pendant laquelle s'effectue le court-circuit.

Comme représenté en figure 1a, l'intensité I₁ est faible entre les instants C et A, et maintenue faible jusqu'à A₁. Elle augmente alors pour atteindre une valeur I₂, ce qui entraîne la fonte du fil électrode, puis redescend avant l'instant C suivant.

En outre, comme illustré en figure 1c, le fil est animé d'un mouvement mécanique alternatif d'avance/recul. Sa vitesse varie d'une vitesse V₁ sensiblement constante, diminue pour s'annuler puis atteindre une vitesse négative V₂, permettant de déposer la goutte dans le bain de soudage de manière mécanique.

Ensuite, après un palier de remontée, la vitesse redevient positive pour à nouveau atteindre la vitesse V₁.

Selon le procédé CSC, la valeur absolue de V₂ est du même ordre de grandeur que celle de V₁. La diminution de la vitesse est commandée par le début de la phase de court-circuit pour atteindre la vitesse négative V₂ avant la fin de la phase de court-circuit.

En résumé, le procédé CSC permet, par un mouvement alternatif du dévidage du fil, de diminuer l'énergie à l'allumage de l'arc ainsi que de supprimer les projections de métal.

Cependant, ce procédé est limité, notamment en termes de taux de dépôt, c'est à dire de volume de métal du fil électrode déposé, du fait de l'obligation de rester dans le mode de transfert par court-circuit et de la relativement faible fréquence de transfert, comme expliqué ci-avant.

Les figures 2a à 2c illustrent, de manière identique aux figures 1a à 1c, la succession des variations des principaux paramètres en fonction du temps t, pour un procédé STT selon l'art antérieur.

Selon le procédé de soudage STT, la vitesse V₁ du fil de l'électrode consommable (voir figure 2c) est constante et sensiblement égale à celle selon un procédé GMAW standard.

Comme montré en figure 2a, la particularité du procédé STT porte essentiellement sur la présence d'une pulsation d'intensité I, pendant la période de court-circuit entre les instants A et C, qui permet d'atteindre une valeur d'intensité I₃ supérieure à l'intensité en période d'arc I₂. Pour ce faire, un moyen de détection spécifique envoie une pulsation d'intensité juste avant le rallumage de l'arc afin d'amorcer la striction du pont de métal liquide formé entre l'électrode fusible et le bain de soudure et ce, dans le but d'éviter les projections provoquées par un réamorçage de l'arc sous forte intensité.

En outre, comme visible sur la figure 2b, la tension u varie de manière analogue à celle du procédé CSC.

Cependant, ce procédé STT est de mise en oeuvre compliquée et nécessite un réglage précis de nombreux paramètres, comme susmentionné.

Les figures 3a à 3b illustrent, de manière identique aux figures précédentes, la succession des variations des principaux paramètres en fonction du temps t, pour un procédé selon la présente invention.

Comme pour les autres procédés, le procédé de soudage à l'arc selon l'invention comprend des cycles de soudage qui se succèdent au fil du temps (t) comprenant chacun un régime ou période d'arc (tension uₐ entre instants A et C) et un régime ou période de court-circuit (tension nulle entre instants A et C) où le métal liquide établit le court-circuit (CC) entre l'électrode consommable et une (ou plusieurs) pièce à souder.

Toutefois, selon le procédé de l'invention, on maintient une intensité d'arc I₂ pendant une période (A₃ à A₄) du régime d'arc en même temps qu'on effectue le déplacement du fil vers la pièce, à une vitesse sensiblement constante V₁, de manière à obtenir une goutte de métal en fusion au bout de l'électrode fusible.

Ensuite, on opère une diminution de l'intensité (depuis I₂) pour atteindre (instant A₅) une intensité minimale I₁ au début de la période de court-circuit (instant C) et ce, dans le but d'éviter les projections au départ du court-circuit (CC) qui sont habituellement provoquées par des instabilités de transfert du métal en fusion du fait d'une intensité trop importante.

On procède, en outre, comme montré en figure 3c, à une diminution de la vitesse de déplacement du fil (depuis V₁) pour atteindre une vitesse minimale V₃, inférieure à V₁ au cours de la période de court-circuit (CC) afin d'initier ou d'améliorer la striction du pont liquide ou col entre le fil d'apport et le bain de soudage.

Comme montré en figure 3a, on réalise alors une augmentation de l'intensité du courant au cours de la période de court-circuit CC (entre les instants C et A) pour atteindre une valeur maximale I₄, supérieure ou égale à l'intensité d'arc I₂, de préférence I₄>I₂, ce qui permet de provoquer la striction du pont liquide ou col entre le fil d'apport et le bain de soudage, qui s'achève du fait des tensions de surface du bain de soudage.

Enfin, on opère une diminution de l'intensité (depuis I₄) au cours de la période de court-circuit pour atteindre (en A) une valeur minimale I₁ inférieure à l'intensité d'arc I₂, concluant ainsi un cycle de transfert de métal sous une intensité faible et supprimant, de ce fait, les instabilités de transfert du métal en fusion lors du réamorçage de l'arc en début de cycle suivant.

Dit autrement, le pic d'intensité I₄ très bref associé à une chute de courant rapide I₁ permet le réamorçage de l'arc à basse intensité supprimant alors toutes les projections caractéristiques de cette phase.

En outre, l'arrêt du fil pendant la phase de court-circuit (CC), visible en figure 3c, permet la diminution du pic d'intensité par rapport à un système où le fil continue à être dévidé pendant cette phase, comme c'est le cas avec le procédé STT par exemple.

D'ailleurs, avec le procédé STT, le fonctionnement classique du pic d'intensité peut nécessiter l'utilisation d'une détection spécifique sur la tension afin de localiser, pendant le court-circuit, la striction du métal d'apport et pouvoir alors faire chuter l'intensité avant le réamorçage de l'arc. Cette détection est rendue complexe du fait que le fil continu à avancer pendant la phase de court-circuit.

Or, ce problème n'existe pas avec le procédé de l'invention car l'arrêt du fil (Vf nulle) pendant la phase de court-circuit facilite la détection de la striction du métal d'apport.

De plus, un fonctionnement classique du pic d'intensité, comme avec le procédé STT, connaît des limitations en termes d'intensité maximale de fonctionnement du fait des instabilités causées lorsque l'on applique une vitesse de dévidage élevée (donc une intensité moyenne élevée) pendant la phase de court-circuit.

Or, là encore, ces effets négatifs n'existent pas avec le procédé de l'invention du fait de l'arrêt du fil pendant le court-circuit, ce qui permet de repousser les limites en intensité.

La valeur d'intensité I₄ pendant la période de court-circuit est représentée sur la figure 3 supérieure à la valeur d'intensité I₂ intervenant pendant la période d'arc. Toutefois, des essais ont montré que ces valeurs peuvent être sensiblement du même ordre de grandeur et dépendent essentiellement de l'énergie nécessaire à initier le détachement de la goutte de métal fondu qui varient suivant les matériaux soudés.

En d'autres termes, selon le procédé de l'invention, il n'est pas nécessaire d'augmenter très significativement l'intensité I₄ au-delà de l'intensité I₂, à la différence du procédé STT où l'intensité I₃ est en général très significativement supérieure à l'intensité I₂ (voir figure 2a). Ceci est dû à l'apport d'inertie engendré par le ralentissement de la vitesse de dévidage du fil pendant le court circuit.

A noter que, comme visible sur la figure 3b, la tension u dans le procédé de l'invention varie de manière analogue à celle des procédés CSC et STT.

A titre purement d'exemples, la mise en oeuvre d'un procédé selon l'invention peut se faire dans les conditions suivantes :
I₁ de 5 à 100 A
I₂ de 50 à 200 A
I₄ de 100 à 300 A
Durée A à C de 5 à 20 ms
Durée C à A de 2 à 7 ms
Durée de CC de 7 à 27 ms
Uₐ de 5 à 30 V
   - la vitesse V₁ de déplacement du fil pendant la période d'arc est de l'ordre de 15 à 40 m/min, et
   - la vitesse minimale V₃ de déplacement du fil est de l'ordre de plus ou moins 1 m/min.

### Exemple

Le procédé de soudage selon la présente invention a été mis en oeuvre avec succès et a permis le soudage, l'une avec l'autre, de deux tôles de 0,6 mm d'épaisseur jointes bout à bout, à une vitesse de soudage de l'ordre de 2,5 m/min.

Le gaz de protection utilisé était un mélange gazeux d'argon et de CO₂ commercialisé sous la dénomination Atal 5 par AIR LIQUIDE.

Les conditions de soudage étaient :
- I1 = 40 A ; I2 = 130 A ; I4 = 250 A ; V1 = 10m/min ; V3 = 0 m/min ; Ua = 20 V.
- matériau : P 265 GH, acier noir, A42.

Le cordon de soudure obtenu était de bonne qualité, présentant une bonne compacité et une absence de porosité, avec très peu de déformation des tôles.

Obtenir de tels résultats est particulièrement surprenant lorsqu'on sait que les limites du procédé CSC se situent au soudage de tôles d'épaisseur minimale de l'ordre de 0,8 à 1 mm, et que les vitesses de soudage pouvant être atteintes ne dépassent pas 1 à 1,5 m/min.

On note en outre que le dispositif permettant de mettre en oeuvre la présente invention peut être simplifié par rapport à celui d'un dispositif avec mouvement alternatif du fil car on peut s'affranchir de moyens permettant d'imposer une vitesse négative au fil de l'électrode consommable.

Le dispositif est composé notamment :
- d'un générateur de soudage pouvant commander et réguler les paramètres électriques de soudage ainsi que les moteurs de dévidage, de récupérer le gaz de soudage et le transmettre en temps voulu au faisceau ;
- d'un système de dévidage de fil électrode permettant d'amener ce fil de la bobine ou du fut dans lequel il est stocké à la torche de soudage.
- d'un faisceau de torche permettant la transmission des informations du moteur de dévidage au générateur de soudage et inversement, mais aussi d'assurer le transfert du gaz et de l'électricité du générateur de soudage à la torche.
- d'une torche de soudage assurant une protection gazeuse nécessaire à la bonne exécution de la soudure, transmettant l'électricité au fil fusible tout en le guidant.

## Revendications

1. Procédé de soudage à l'arc mettant en oeuvre une électrode consommable dont une extrémité est progressivement fondue par un courant électrique alimentant l'électrode, dans lequel se succèdent au cours du temps (t), des cycles de soudage (A-C-A) comprenant chacun une période d'arc (uₐ ; instants A-C) et une période de court-circuit (C-A) où le métal liquide établit un court-circuit (CC) entre l'extrémité fondue de l'électrode et au moins une pièce à souder, chaque cycle comprenant les étapes de :
a) maintien d'une intensité d'arc I₂ constante pendant une période (A₃ à A₄) de la période d'arc (A-C) en même temps que le déplacement de l'électrode consommable vers la pièce à souder, à une vitesse V₁ ;
b) diminution de l'intensité pour atteindre une intensité minimale I₁ au début (en C) de la période de court-circuit avec I₁ < I₂;
c) diminution de la vitesse de déplacement du fil de l'électrode consommable pour atteindre une vitesse minimale V₃, avec V₃ < V₁, maintien de cette dite vitesse à la valeur V₃ au cours d'au moins une partie de la période de court-circuit (C-A) ;
d) augmentation de l'intensité au cours de la période de court-circuit (C-A) pour atteindre une valeur maximale I₄, avec I₄ ≥ I₂ ;
e) puis, subséquemment à l'étape d), diminution de l'intensité au cours de la période de court-circuit (C-A) pour atteindre une valeur minimale I₁, avec I₁ < I₂, avec maintien de cette dite intensité à cette valeur minimale I₁,
**caractérisé en ce que** la vitesse minimale V₃ est conservée au début de la période d'arc (en A).

2. Procédé selon la revendication 1, **caractérisé en ce que** la vitesse minimale V₃ est sensiblement nulle.

3. Procédé selon l'une quelconque des revendications précédentes, **caractérisé en ce qu'**à l'étape d), l'augmentation de l'intensité (de I₁ à I₄) au cours de la période de court-circuit se produit pendant la diminution de la vitesse de déplacement du fil de l'électrode consommable (de V₁ à V₃) de l'étape c).

4. Procédé selon l'une quelconque des revendications précédentes, **caractérisé en ce qu'**on augmente l'intensité (de I₁ à I₄) au cours de la période de court-circuit et on diminue la vitesse de déplacement du fil jusqu'à obtenir une vitesse minimale V₃ engendrant le détachement d'au moins une goutte de métal fondu.

5. Procédé selon l'une quelconque des revendications précédentes, **caractérisé en ce que** la valeur d'intensité maximale I₄ est maintenue pendant un palier (C₂ à C₃) alors que la vitesse de déplacement du fil de l'électrode consommable est maintenue à la vitesse minimale V₃.

6. Procédé selon l'une quelconque des revendications précédentes, **caractérisé en ce que** la valeur de la tension est mesurée pour déclencher la baisse d'intensité avant le rétablissement de l'arc, alors que la vitesse de déplacement du fil de l'électrode consommable est maintenue à la vitesse minimale V₃.

7. Procédé selon l'une quelconque des revendications précédentes, **caractérisé en ce que**, lors du soudage, on met en oeuvre une protection gazeuse et on réalise le soudage d'une ou plusieurs pièces métalliques en un métal ou alliage métallique choisi parmi les aciers au carbone revêtus ou non, les aciers inoxydables revêtus ou non, et l'aluminium ou le titane, revêtus ou non.

8. Dispositif de commande de l'alimentation électrique d'un générateur de soudage à l'arc par transfert de métal par court-circuit mettant en oeuvre une électrode consommable, ledit générateur comprenant des moyens d'alimentation en courant électrique, ledit dispositif comprenant un circuit de commande pour la mise en oeuvre du procédé selon l'une quelconque des revendications 1 à 7.

9. Générateur de courant de soudage MIG/MAG comprenant des moyens d'alimentation en courant électrique et un dispositif de commande desdits moyens d'alimentation électrique selon la revendication 8.

## Patentansprüche

1. Lichtbogen-Schweißverfahren, bei dem eine Abschmelzelektrode verwendet wird, von der ein Ende nach und nach durch einen elektrischen Strom, mit dem die Elektrode versorgt wird, abgeschmolzen wird, wobei während der Zeit (t) Schweißzyklen (A-C-A) aufeinanderfolgen, die jeweils eine Lichtbogenzeit (u.; Zeitpunkte A-C) und eine Kurzschlusszeit (C-A), in der das flüssige Metall einen Kurzschluss (CC) zwischen dem abgeschmolzenen Ende der Elektrode und mindestens einem zu schweißenden Werkstück herstellt, umfassen, wobei jeder Zyklus folgende Schritte umfasst:
a) Aufrechterhalten einer konstanten Lichtbogenstromstärke I» während eines Zeitraums (A₃ bis A₄) der Lichtbogenzeit (A-C) zeitgleich zur Bewegung der Abschmelzelektrode in Richtung des zu schweißenden Werkstücks mit einer Geschwindigkeit V₁;
b) Verringerung der Stromstärke, um eine Mindeststromstärke I₁ zu Beginn (bei C) der Kurzschlusszeit zu erreichen, wobei I₁ < I₂;
c) Verringerung der Bewegungsgeschwindigkeit des Drahts der Abschmelzelektrode, um eine Mindestgeschwindigkeit V₃ zu erreichen, wobei V₃ < V₁, Halten dieser Geschwindigkeit auf dem Wert V₃ während mindestens eines Teils der Kurzschlusszeit (C-A);
d) Erhöhung der Stromstärke während der Kurzschlusszeit (C-A), um einen Höchstwert I₄ zu erreichen, wobei I₄ > I₂;
e) dann, im Anschluss an Schritt d), Verringerung der Stromstärke während der Kurzschlusszelt (C-A), um einen Mindestwert I₁ zu erreichen, wobei I₁ < I₂. mit Halten dieser Stromstärke auf diesem konstanten Mindestwert I₁.
**dadurch gekennzeichnet, dass** die Mindestgeschwindigkeit V₃ zu Beginn der Lichtbogenzeit (bei A) beibehalten wird.

2. Verfahren nach Anspruch 1, **dadurch gekennzeichnet, dass** die Mindestgeschwindigkeit V₃ im Wesentlichen null ist.

3. Verfahren nach einem der vorhergehenden Ansprüche, **dadurch gekennzeichnet, dass** in Schritt d) die Erhöhung der Stromstärke (von I₁ auf I₄) während der Kurzschlusszeit während der Verringerung der Bewegungsgeschwindigkeit des Drahts der Abschmelzelektrode (von V₁ auf V₃) von Schritt c) erfolgt.

4. Verfahren nach einem der vorhergehenden Ansprüche, **dadurch gekennzeichnet, dass** während der Kurzschlusszeit die Stromstärke (von I₁ auf I₄) erhöht und die Bewegungsgeschwindigkeit des Drahts verringert wird, bis eine Mindestgeschwindigkeit V₃ erreicht ist, wodurch die Ablösung von mindestens einem Tropfen geschmolzenen Metalls bewirkt wird.

5. Verfahren nach einem der vorhergehenden Ansprüche, **dadurch gekennzeichnet, dass** der Höchstwert der Stromstärke I₄ während eines Plateaus (C₂ bis C₃) gehalten wird, während die Bewegungsgeschwindigkeit des Drahts der Abschmelzelektrode auf der Mindestgeschwindigkeit V₃ gehalten wird.

6. Verfahren nach einem der vorhergehenden Ansprüche, **dadurch gekennzeichnet, dass** der Spannungswert gemessen wird, um die Absenkung der Stromstärke vor der erneuten Herstellung des Lichtbogens auszulösen, während die Bewegungsgeschwindigkeit des Drahts der Abschmelzelektrode auf der Mindestgeschwindigkeit V₃ gehalten wird.

7. Verfahren nach einem der vorhergehenden Ansprüche, **dadurch gekennzeichnet, dass** während des Schweißens ein Gasschutz verwendet wird und das Schweißen von einem oder mehreren metallischen Werkstücken aus einem Metall oder einer Metalllegierung ausgewählt aus beschichteten oder nicht beschichteten Kohlenstoffstählen, beschichteten oder nicht beschichteten rostfreien Stählen und beschichtetem oder nicht beschichtetem Aluminium oder Titan erfolgt.

8. Vorrichtung zur Steuerung der Stromversorgung eines Generators zum Kurzschluss-Metallübertragungs-Lichtbogenschweißen, bei dem eine Abschmelzelektrode verwendet wird, wobei der Generator Mittel zur Stromversorgung umfasst, wobei die Vorrichtung eine Steuerschaltung für die Ausführung des Verfahrens nach einem der Ansprüche 1 bis 7 umfasst.

9. MIG/MAG-Schweißstromgenerator, der Mittel zur Stromversorgung und eine Vorrichtung zur Steuerung der Mittel zur Stromversorgung nach Anspruch 8 umfasst.

## Claims

1. Arc welding method implementing a consumable electrode, one end of which is progressively melted by an electric current supplying the electrode, wherein welding cycles (A-C-A) follow one after another over time (t), each comprising an arc period (uₐ: moments A-C) and a short-circuit period (C-A) in which the liquid metal establishes a short-circuit (CC) between the molten end of the electrode and at least one workpiece to be welded, each cycle comprising the steps of:
a) maintaining a constant arc current I₂ for a period (A₃ to A₄) of the arc period (A-C) at the same time as the consumable electrode is moved at a speed V₁ towards the workpiece to be welded;
b) reducing the current in order to reach a minimum current I₁ at the start (at C) of the short-circuit period, where I₁ < I₂;
c) reducing the speed of movement of the consumable electrode wire in order to reach a minimum speed Vs, where V₃ < V₁, maintaining said speed at the value Vs over at least part of the short-circuit period (C-A);
d) increasing the current over the short-circuit period (C-A) in order to reach a maximum value I₄, where I₄ < I₂;
e) then, after step d), reducing the current over the short-circuit period (C-A) in order to reach a minimum value I₁, where I₁ < I₂, while maintaining said current at said constant minimum value I₁;
**characterized in that** the minimum speed V₃ is maintained at the start of the arc period (at A),

2. Method according to claim 1, **characterised in that** the minimum speed V₃ is substantially zero.

3. Method according to any one of the preceding claims, **characterised in that**, at step d), the increase in the current (from I₁ to I₄) over the short-circuit period takes place while the speed of movement of the consumable electrode wire is being reduced (from V to V3) in step c).

4. Method according to any one of the preceding claims, **characterised in that** the current is increased (from I₁ to I₄) over the short-circuit period and the speed of movement of the wire is reduced to a minimum speed Vs, causing at least one drop of molten metal to be detached.

5. Method according to any one of the preceding claims, **characterised in that** the maximum current value I₄ is maintained during a hold period (C₂ to C₃) while the speed of movement of the consumable electrode wire is maintained at the minimum speed V₃.

6. Method according to any one of the preceding claims, **characterised in that** the voltage value is measured in order to trigger the reduction in current before the arc is re-established, while the speed of movement of the consumable electrode wire is maintained at the minimum speed V₃.

7. Method according to any one of the preceding claims, **characterized in that**, during welding, a gas shield is implemented and one or more metal workpieces are welded which are made of a metal or a metal alloy selected from coated or uncoated carbon steels, coated or uncoated stainless steels, and coated or uncoated aluminium or titanium.

8. Device for controlling the power supply to a short-circuit metal transfer arc welding generator implementing a consumable electrode, said generator comprising means for supplying electric current, said device comprising a control circuit for implementing the method according to any one of claims 1 to 7.

9. MIG/MAG welding current generator comprising means for supplying electric current and a device for controlling said power supply means according to claim 8.
